Europäisches Patentamt

European Patent Office

Office européen des brevets

(19)

(11) Veröffentlichungsnummer: **0 145 864**
A2

## (12) EUROPÄISCHE PATENTANMELDUNG

(21) Anmeldenummer: 84111509.0

(22) Anmeldetag: 27.09.84

(51) Int. Cl.⁴: **B 29 C 49/64**

(30) Priorität: 05.10.83 DE 3336244

(43) Veröffentlichungstag der Anmeldung: 26.06.85
Patentblatt 85/26

(84) Benannte Vertragsstaaten: **DE FR GB IT NL**

(71) Anmelder: **BAYER AG, Konzernverwaltung RP
Patentabteilung, D-5090 Leverkusen 1 Bayerwerk (DE)**

(72) Erfinder: **Heidenreich, Klaus, Dipl.-Ing., Spandauer
Strasse 16, D-5090 Leverkusen 1 (DE)**
Erfinder: **Depcik, Hans-Werner, Vennstrasse 124A,
D-4000 Düsseldorf 22 (DE)**
Erfinder: **Radojewski, Hans, Emil-Nolde-Strasse 36,
D-5090 Leverkusen 1 (DE)**

(54) **Verfahren zum Tempern thermoplastisch verformter Kunststoffteile.**

(57) Bei dieser Erfindung werden die Eigenspannung in Kunststoffflaschen durch Tempern mittels Infrarotstrahlen – insbesondere durch gezielte Bestrahlung kritischer Stellen – in kurzer Zeit abgebaut.

EP 0 145 864 A2

0145864

- 1 -

BAYER AKTIENGESELLSCHAFT      5090 Leverkusen, Bayerwerk

Konzernverwaltung RP
Patentabteilung              KR/ABc


Verfahren zum Tempern thermoplastisch verformter
Kunststoffteile

---

Die Erfindung betrifft ein Verfahren zum Tempern thermoplastisch verformter Kunststoffteile zwecks Verringerung
von Eigenspannungen, in dem das Kunststoffteil nach der
Formgebung mit Wärme beaufschlagt wird.

Durch die thermoplastischen Verarbeitungen können
Eigenspannungen im Fertigteil entstehen, die erst im
Laufe der Zeit Rissbildungen verursachen können, wodurch dann der Gegenstand unbrauchbar wird. Das gilt
insbesondere für Kunststoff-Flaschen, bei denen
Spannenrisse infolge der geringen Oberflächenspannung
der Reinigungsmittel erleichtert werden.

Bekannt ist das Tempern im Ölbad, bei dem die Teile
in ein Ölbad eingetaucht werden.

Der Nachteil dieses Verfahrens besteht darin, daß bei
einem erhitzten Ölbad erhebliche Umwelt-Schutzmaßnahmen
erforderlich sind. Weiter ist die Reinigung der getemperten Kunststoffteile vom Öl aufwendig. Das Ver-

Le A 22 624-Ausland

fahren wird deshalb vornehmlich nur zum Tempern von Prüfkörpern eingesetzt.

Bekannt ist ferner die Wärme durch Luft mittels Konvektion auf die Kunststoffteile zu übertragen. Das kann chargenweise in einem Wärmeschrank oder kontinuierlich in einem Durchlaufofen erfolgen, wobei die Durchwärmzeit je nach Wanddicke im allgemeinen über 30 min liegt.

Bei einer Übertragung der Wärme durch Luft ist der Wirkungsgrad gering. Die lange Durchwärmzeit erfordert voluminöse Einrichtungen, die zumeist noch mit Verschleißteilen wie Ventilatoren ausgerüstet sind. Die Nachbearbeitung zum Beispiel der extrusionsgeblasenen Kunststoffteile erfordert beim Wärmeschranken einen zusätzlichen getrennten Arbeitsgang oder bei einem Durchlaufofen einen hohen Platzbedarf, der nur schwierig bei Fertigungsstraßen zu erfüllen ist. Auch ist der Energieaufwand wegen der langen Durchwärmzeit, die sich ja nach der dicksten Stelle richten muß, groß.

Weiter ist bekannt Folien oder Platten durch Infrarotstrahlen auf eine Verformungstemperatur zu bringen, die oberhalb des Erweichungspunktes liegt.

Bei diesem Verfahren werden sowohl von der Aufgabenstellung wie auch von Arbeitsergebnis ganz andere Ziele - nämlich Umformung von einem flächigen in ein räumliches Gebilde - verfolgt. Denn durch die Erweichung tritt eine unerwünschte Verformung bzw. ein Schwund auf.

Der Erfindung liegt die Aufgabe zugrunde ein Verfahren zum Tempern zu finden, daß den gezielten Spannungsaus-

Le A 22 624

gleich mit einfachen technischen Mitteln in kurzer Zeit erlaubt, wobei die Einrichtung hinsichtlich der Abmessung zwecks Aufstellung hinter der Fertigungsmaschine kompakt sein sollte.

Die Aufgabe wird erfindungsgemäß dadurch gelöst, daß die Wärme mittels Infrarotstrahlen auf das Kunststoffteil übertragen wird.

Durch die direkte Übertragung der Wärme mittels Strahlen, die jeweils von dem betreffenden Kunststoff absorbiert werden, erfolgt eine gezielte intensive Erwärmung, die einen schnellen Abbau der bei der thermoplastischen Verformung entstandenen inneren Spannung zulassen. Besonders geeignet sind Infrarot-Strahler, denn die eingebrachte Energie wird wegen der genauen Dosierung weitgehend genutzt. Der technische Aufwand ist gering. Wegen der kleinen Abmessungen kann die Einrichtung auch hinter schon bestehenden Fertigungsanalgen hintergeschaltet werden.

In einer besonderen Durchführung des Verfahrens werden Infrarotstrahlen mit Strahlungsmaxima von 1200 nm bis 5000 nm verwendet.

Diese genannten Strahlungsmaxima haben sich insbesondere bei unterschiedlichen Wandstärken als geeignet erwiesen.

In einer anderen Durchführung des Verfahrens wird durch die übertragene Wärme eine Temperatur erzeugt, die im Mittel 5-30 %, insbesondere 10-20 %, unter der Vicat-Erweichungstemperatur $VST/_B$ (DIN 53 460) liegt.

Le A 22 624

Durch die genaue Einstellung der Temperatur an jeder beliebigen Stelle des Kunststoffteiles direkt unterhalb des Erweichungspunktes (VST/$_B$ Vicat softening temperature) wird ein gleichmäßiger, schneller Abbau der bei der Verformung entstandenen Eigenspannungen erzielt.

In einer weiteren Durchführung des Verfahrens werden die Kunststoffteile über eine Zeit von 20-240 Sekunden, insbesondere 30-120 Sekunden, bestrahlt.

Der Vorteil dieses Verfahrens besteht insbesondere darin, daß bei einer Temperatur kurz unterhalb des Erweichungspunktes die Eigenspannungen schnell abgebaut werden können, so daß die hierfür erforderliche Einrichtung von kurzer Baulänge sein kann.

In einer Durchführung des Verfahrens werden als verformte Kunststoffteile Hohlkörper aus Polycarbonat bestrahlt.

Hohlkörper, wie Flaschen, Kannen usw., die mindestens teilschichtig aus Polycarbonat, sind besonders geeignet als Mehrwegbehälter für Lebensmittel, die durch das Tempern die jeweilige Reinigung nach der Benutzung schadlos überstehen.

Es kommen thermoplastische aromatische Polycarbonate, die durch Umsetzung von Diphenolen, insbesondere von Dihydroxydiarylalkanen, mit Phosgen oder Diestern der Kohlensäure erhältlichen Polykondensate in Betracht, wobei

Le A 22 624

außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Als Kettenabbrecher dienen beispielsweise Monophenole. Als Verzweiger beispielsweise Trisphenole oder Tetraphenole.

Die Polycarbonate haben mittlere Gewichtsmittelmolekulargewichte $\overline{M}w$ zwischen 10 000 und 100 000, vorzugsweise zwischen 20 000 und 40 000, ermittelt durch Messungen der rel. Viskosität in $CH_2Cl_2$ bei 25°C und einer Konzentration von 0,5 g/pro 100 ml.

Geeignete Diphenole sind z.B. Hydrochinon, Resorcin, 4.4'-Dihydroxydephenyl, Bis-(hydroxy-phenyl)alkane wie beispielsweise $C_1$-$C_8$-Alkylen- bzw. $C_2$-$C_8$-Alkylidenbisphenole, Bis-(hydroxyphenyl)-cycloalkyne wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha$, $\alpha$'-Bis-(hydroxy-phenyl)-diisopropylbenzol sowie die entsprechenden kernalkylierten bzw. kernhalogenierten Verbindungen. Bevorzugt sind Polycarbonate auf Basis Bis-(4-hydroxyphenyl)-propan-2.2 (Bisphenol A), Bis-(4-hydroxy-3,5-dichlorphenyl)-propan-2.2 (Tetrachlorbisphenol A), Bis-(4-hydroxy-3,5-dibromphenyl)-propan-2.2 (Tetrabrombisphenol A), Bis-(4-hydroxy-3,5-dimethyl-phenyl)-propan-2,2 (Tetramethylbisphenol A), Bis-(4-hydroxy-phenyl)-

Le A 22 624

cyclohexan-1.1 (Bisphenol Z) sowie auf Basis von Dreikernbisphenolen wie $\alpha$, $\alpha$'-Bis-(4-hydroxyphenyl)-p-di-
isopropylbenzol. Weitere geeignete Diphenole sowie die
Herstellung der Polycarbonate sind beispielsweise in
den US-Patenten 3 028 365 (he 1609), 3 062 781 (he 1818)
und 3 879 347 (Le A 14 240) beschrieben.

Beispiel 1

Die Rißbildung von extrusionsgeblasenen Kannen aus Polycarbonat mit folgenden Daten

Boden 150 x 80 mm Dicke 1-6 mm
Gesamthöhe 290 mm
Flaschenhalsöffnung 42 mm
Inhalt 2,4 l
Gewicht 180 g

wird im unbestrahlten und bestrahlten Zustand durch den
bekannten Tetratest untersucht.

Hierzu wird eine extrusionsgeblasene Kanne aus Polycarbonat ohne Nachbehandlung (Tempern) in einen Glasbehälter gestellt. Sowohl die Polycarbonat-Flasche als
auch der Glasbehälter werden bei RT ca. 2 cm hoch mit
Tetrachlorkohlenstoff gefüllt.

Ergebnis

Innerhalb von 60 Sekunden treten sichtbare Risse in Bereichen hoher innerer Spannungen vornehmlich im Bereich
der Bodenquetschnaht auf.

Dann wird eine in gleicher Weise hergestellte Kanne mit
dem Boden zum Strahler einer IR-Strahlung (Strahler:
Heraeus MBS 1200/250, Nennleistung: 38,4 kW/m$^2$, Abstand Strahlerboden: 60 mm, Zeit: 60 sec) ausgesetzt.

Le A 22 624

0145864

Der Flaschenboden wird dabei auf ca. 130°C erwärmt. Anschließend wird der gleiche Tetra-Test durchgeführt.

Ergebnis

Auch nach 5 min Lagerung in Tetrachlorkohlenstoff traten keine Spannungsrisse auf.

Beispiel 2

Eine extrusionsgeblasene Flasche mit

Durchmesser 39 mm
Höhe        234 mm
Wanddicke   1-3 mm
Inhalt      1 l
Gew.        70 g

wird jeweils im unbestrahlten und bestrahlten Zustand mit 2 % NaOH bei 80°C über 20 min. gereinigt.

Ergebnis

Ohne Nachbehandlung (Tempern) zeigt die Flaschen schon nach der ersten Reinigung durchgehende Risse im Boden (Leckage). Nach Temperung, wie im vorigen Beispiel beschrieben, hat die Flasche auch nach mehr als 50 Reinigungsdurchgängen keine Risse und ist somit erst durch Tempern als Mehrwegflasche einsetzbar.

Le A 22 624

## Patentansprüche

1. Verfahren zum Tempern thermoplastisch verformter Kunststoffteile zwecks Verringerung der Eigenspannungen, in dem das Kunststoffteil nach der Formgebung mit Wärme beaufschlagt wird, dadurch gekennzeichnet, daß die Wärme mittels Infrarotstrahlen auf das Kunststoffteil übertragen wird.

2. Verfahren zum Tempern nach Anspruch 1, dadurch gekennzeichnet, daß Infrarotstrahlen mit einem Strahlungsmaxima von 1200 nm bis 5000 nm verwendet werden.

3. Verfahren zum Tempern nach Ansprüchen 1-2, dadurch gekennzeichnet, daß durch die übertragene Wärme eine Temperatur erzeugt wird, die im Mittel 5-30 %, insbesondere 10-20 %, der Vicat-Erweichungstemperatur $VST/_B$ (DIN 53460) liegt.

4. Verfahren zum Tempern nach Ansprüchen 1-3, dadurch gekennzeichnet, daß die Kunststoffteile über eine Zeit von 20-240 s, insbesondere 30-120 s bestrahlt werden.

5. Verfahren zum Tempern nach Ansprüchen 1-4, dadurch gekennzeichnet, daß als verformte Kunststoffteile Hohlkörper aus Polycarbonat bestrahlt werden.

Le A 22 624